# EUROPÄISCHE PATENTSCHRIFT

(11) **EP 2 899 464 B1**
(45) Veröffentlichungstag und Bekanntmachung des Hinweises auf die Patenterteilung: **11.01.2017**
(21) Anmeldenummer: 14152042.9
(22) Anmeldetag: 22.01.2014
(51) Int. Cl.: F23M 5/08, F23R 3/00, F23R 3/26, F02C 7/10, F02C 7/18

(54) **Silobrennkammer für eine Gasturbine**
Silo combustion chamber for a gas turbine
Turbine à gaz avec une chambre de combustion de type silo

(43) Veröffentlichungstag der Anmeldung: 29.07.2015
(73) Patentinhaber: Siemens Aktiengesellschaft, 80333 München (DE)
(72) Erfinder: Johnson, David, 10117 Berlin (DE); Lapp, Patrick, 13359 Berlin (DE); Pipke, Romina, 10777 Berlin (DE); Rexin, Olaf, 15366 Neuenhagen bei Berlin (DE); Wilke, Martin, 45276 Essen (DE)

(56) Entgegenhaltungen:
- JP-A- H09 329 335
- JP-A- 2000 008 881
- JP-A- 2001 107 748
- US-A- 4 458 481
- US-A- 5 085 038
- US-A1- 2009 180 873

## Beschreibung

Die Erfindung betrifft eine Silobrennkammer für eine Gasturbine, umfassend ein zylindrisches Flammrohr, welches auf seiner Außenseite unter Bildung eines Spaltes mit einer zylindrischen Ummantelung versehen ist, wobei eine erste Grundfläche des Flammrohrs einen Brenner aufweist und die zweite Grundfläche des Flammrohrs eine mit dem Turbineneintritt der Gasturbine verbindbare Öffnung aufweist, wobei die Ummantelung in einem axialen Mittelbereich eine Entnahmeleitung zur Entnahme von Luft aus dem Spalt aufweist.

Eine Gasturbine ist eine Strömungsmaschine, in der ein unter Druck stehendes Gas expandiert. Sie besteht aus einer Turbine oder Expander, einem vorgeschalteten Verdichter und einer zwischengeschalteten Brennkammer. Das Wirkungsprinzip beruht auf dem Kreisprozess (Joule-Prozess): Dieser komprimiert über die Beschaufelung einer oder mehrerer Verdichterstufen Luft, mischt diese anschließend in der Brennkammer mit einem gasförmigen oder flüssigen Treibstoff, zündet und verbrennt.

So entsteht ein Heißgas (Mischung aus Verbrennungsgas und Luft), das im nachfolgenden Turbinenteil entspannt, wobei sich thermische in mechanische Energie umwandelt und zunächst den Verdichter antreibt. Der verbleibende Anteil wird beim Wellentriebwerk zum Antrieb eines Generators, eines Propellers oder anderen rotierenden Verbrauchern verwendet. Beim Strahltriebwerk dagegen beschleunigt die thermische Energie den heißen Gasstrom, was den Schub erzeugt.

Neben den häufig eingesetzten Ring- oder Rohrbrennkammern werden Gasturbinen auch mit so genannten Silobrennkammern ausgestattet. Diese sind vergleichsweise groß ausgebildet und umfassen ein zylindrisches Flammrohr, welches auf der Außenseite unter Bildung eines Spaltes mit einer zylindrischen Ummantelung versehen ist. Die im Verdichter verdichtete Luft strömt durch den Spalt zum Boden der Silobrennkammer, der eine Grundfläche des Zylinders bildet und an dem die Brenner angeordnet sind. Hier wird die Luft zur Verbrennung genutzt und das im Innenraum des Flammrohrs entstandene Heißgas wird durch eine Öffnung in der anderen Grundfläche des Zylinders zum Turbineneintritt geleitet.

Zur Erhöhung des Wirkungsgrades der Gasturbine ist es bekannt, diese mit einem Wärmetauscher (Rekuperator) auszustatten, der das Abgas der Turbine dazu nutzt, die im Verdichter komprimierte Luft vor ihrer Zuführung zu den Brennern vorzuwärmen. Hierzu werden bei Silobrennkammern seitlich an der Ummantelung des Flammrohrs Entnahmeleitungen für die Luft angeordnet, mittels derer die vom Verdichter in den Spalt strömende Luft entnommen und dem Wärmetauscher zugeführt werden kann. Hierbei hat sich herausgestellt, dass es von Vorteil ist, die Entnahmeleitungen in Richtung der Achse der zylindrischen Silobrennkammer etwa mittig anzuordnen, da bei weiter in Richtung der Brenner angeordneten Entnahmeleitungen einerseits Bauraumprobleme auftreten können, andererseits die Verdichterluft beim weiteren Strömen durch den Spalt zu weit erwärmt wird. Für einen möglichst hohen Wirkungsgrad des Wärmetauschers sollte nämlich der Temperaturunterschied zwischen Verdichterluft und Abgas der Gasturbine möglichst groß sein.

Bei derartigen mittig angeordneten Entnahmeleitungen ergibt sich jedoch das Problem, dass die Kühlung des Flammrohres im Bereich nahe des Silobrennkammerbodens, d. h. in Richtung zu den Brennern hin, nicht ausreichend sein kann. Das Flammrohr ist hier mit Hitzeschildsteinen ausgekleidet. Werden deren Halter nicht ausreichend gekühlt, kann es zum Steinabwurf und einem dadurch verursachten Turbinenschaden kommen.

Es ist daher Aufgabe der Erfindung, eine Silobrennkammer der eingangs genannten Art anzugeben, die einerseits einen besonders hohen Wirkungsgrad der Gasturbine durch Nutzung eines Wärmetauschers ermöglicht und andererseits eine besonders lange Lebensdauer aufweist.

Diese Aufgabe wird erfindungsgemäß gelöst, indem die Ummantelung in einem der erste Grundfläche zugeordneten axialen Endbereich eine Anzapfleitung aufweist, die in die Entnahmeleitung mündet.

Die Erfindung ist eine Silobrennkammer gemäß dem Anspruch 1.

Das Dokument US2009/0180873 offenbart eine Silobrennkammer gemäß dem Oberbegriff des Anspruchs 1.

Die Erfindung geht dabei von der Überlegung aus, dass die Kühlung im dem Brenner zugewandten axialen Endbereich der Silobrennkammer durch die verringerte Kühlluftmenge erzeugt wird, die in Folge der Entnahme der Verdichterluft dort entsteht. Zwar ist der statische Druck in diesem Bereich noch immer hoch, jedoch der Luftmassenstrom geringer, so dass die dortigen Bauteile schlechter konvektiv gekühlt werden. Daher sollte die konvektive Flammrohrkühlung verbessert werden, indem der Luftmassenstrom im Spalt zwischen Entnahmeleitung und Silobrennkammerboden erhöht wird. Hierzu sind im Bereich des Silobrennkammerbodens Anzapfleitungen (Bleedleitungen) angeordnet, die zur Entnahmeleitung führen. Diese erzeugen eine Art Zwangsströmung, die sicherstellt, dass ein gewisser Luftmassenstrom am kompletten Flammrohr vorbei gelangt und erst über die Anzapfleitung in die zum Wärmetauscher führende Entnahmeleitung gelangt.

Vorteilhafterweise ist dabei eine Mehrzahl gleichartiger Entnahmeleitungen in regelmäßigem Abstand entlang des Umfangs der Ummantelung angeordnet, wobei die Ummantelung für jede der Entnahmeleitungen in einem der ersten Grundfläche zugeordneten axialen Endbereich eine Anzapfleitung aufweist, die in die jeweilige Entnahmeleitung mündet. Die Entnahmeleitungen sind also z. B. sternförmig um die gesamte Silobrennkammer herum angeordnet, oder es sind nur zwei Entnahmeleitungen gegenüberliegend angeordnet. In jedem Fall ist für jede Entnahmeleitung eine Anzapfleitung vorgesehen, die in beschriebener Weise den Luftmassenstrom im dem Silobrennkammerboden zugewandten Bereich des Spaltes zwischen Flammrohr und Ummantelung sicherstellt.

Die jeweilige Anzapfleitung weist dabei vorzugsweise einen geringeren Innendurchmesser auf als die jeweilige Entnahmeleitung. Die Entnahmeleitungen sind nämlich vorteilhaft vergleichsweise groß ausgebildet, um die Druckverluste in diesen Leitungen gering zu halten. Zu große Druckverluste im Rekuperatorsystem vergrößern nämlich automatisch den Brennkammerdruckverlust und erhöhen als Ergebnis den Kühlluftverbrauch der Brennkammer. Dies hat negative Einflüsse auf den Wirkungsgrad der Anlage. Vorzugsweise werden hier Leitungen größer als DN500, besser größer als DN 700 eingesetzt. Die Anzapfleitungen müssen hingegen nur gerade so groß gewählt sein, dass noch ein ausreichender Luftstrom zur konvektiven Kühlung an den jenseits der Entnahmeleitung liegenden Bereichen des Flammrohrs anliegt. Je geringer hier der Luftmassenstrom ist, desto geringer bleibt auch die Temperatur der dem Wärmetauscher zugeführten Luft, was positiv hinsichtlich dessen Wirkungsgrades ist. Daher können diese Anzapfleitungen kleiner dimensioniert sein.

Vorteilhafterweise sind die jeweilige Anzapfleitung und der Abschnitt der jeweiligen Entnahmeleitung zwischen Ummantelung und Mündung der Anzapfleitung derart ausgebildet, dass die Anzapfleitung einen geringeren Druckverlust erzeugt als der Abschnitt der jeweiligen Entnahmeleitung. Hierdurch wird erreicht, dass sich die gewünschte Kühlströmung auch sicher einstellt, d. h. ein ausreichender Teil der Luft tatsächlich durch die Anzapfleitung und nicht nur direkt durch die Entnahmeleitung strömt. Der Unterschied hinsichtlich des Druckverlusts kann bei der Auslegung hinsichtlich des benötigten Kühlbedarfs eingestellt werden.

Eine erste vorteilhafte Umsetzung dieses Druckverlustunterschiedes kann dadurch realisiert sein, dass der Übergang zwischen Ummantelung und jeweiliger Anzapfleitung abgerundet ist. Dies führt zu geringen Druckverlusten am Eintritt der Anzapfleitung.

Entsprechend sollte vorteilhafterweise der Übergang zwischen Ummantelung und jeweiliger Entnahmeleitung scharfkantig sein, so dass hier die Eintrittsdruckverluste direkt in die Entnahmeleitung entsprechend hoch sind. Durch die vorgenannten Maßnahmen kann bereits durch die Eintrittsdruckverluste der Anzapf- bzw. Entnahmeleitung ein ausreichend hoher Druckverlustunterschied gewährleistet sein, so dass sich die gewünschte Zwangsströmung zur konvektiven Kühlung an den jenseits der Entnahmeleitung liegenden Bereichen des Flammrohrs einstellt.

Sollte der Eintrittsdruckverlustunterschied hierzu allein nicht ausreichend sein, kann alternativ oder zusätzlich der Abschnitt der jeweiligen Entnahmeleitung zwischen Eintritt und Mündung der Anzapfleitung eine oder mehrere Blenden aufweisen. Hierdurch wird ebenfalls der Druckverlust für das direkte Einströmen in die Entnahmeleitung erhöht.

Eine Gasturbine umfasst vorteilhafterweise eine beschriebene Silobrennkammer.

Die beschriebene Entnahmeleitung führt dabei vorteilhafterweise zu einem Wärmetauscher, in dem die entnommene Luft mittels der Abgaswärme der Gasturbine vorgewärmt wird. Hierzu bildet die entnommene Luft einen ersten Fluidstrom und das Abgas der Gasturbine den zweiten Fluidstrom im Wärmetauscher. Die erwärmte Luft wird anschließend im Bereich der Brenner wieder eingeführt und dort zur Verbrennung des Treibstoffs in den Brennern im Flammrohr genutzt.

Der Spalt in der Silobrennkammer ist dazu vorteilhafterweise zur ersten Grundfläche, d. h. zum Brennkammerboden mit den Brennern hin abgedichtet, so dass die Verdichterluft ausschließlich entweder durch vorgesehene Kühlbohrungen oder über den Wärmetauscher in das Flammrohr strömen kann.

Die mit der Erfindung erzielten Vorteile bestehen insbesondere darin, dass durch die Anbringung von Anzapfleitungen aus dem Bereich zwischen Luftentnahme und Brennkammerboden eine ausreichende Kühlung des Flammrohres erreicht wird. Dadurch wird eine Nutzung der Rekuperation in Gasturbinen mit Silobrennkammern ermöglicht, wodurch eine Verbesserung des thermodynamischen Gasturbinenwirkungsgrades um ca. 8,5 % erreicht werden kann. Die Anordnung eines Wärmetauschers ist auch vergleichsweise günstig gegenüber einer kombinierten Gas- und Dampfturbinenlösung und vergleichsweise einfach nachrüstbar.

Ein Ausführungsbeispiel der Erfindung wird anhand einer Zeichnung näher erläutert. Darin zeigen
- FIG 1: einen teilweisen Längsschnitt durch eine Gasturbine und
- FIG 2: einen Querschnitt durch die Silobrennkammer der Gasturbine.

Gleiche Teile sind in allen Figuren mit denselben Bezugszeichen versehen.

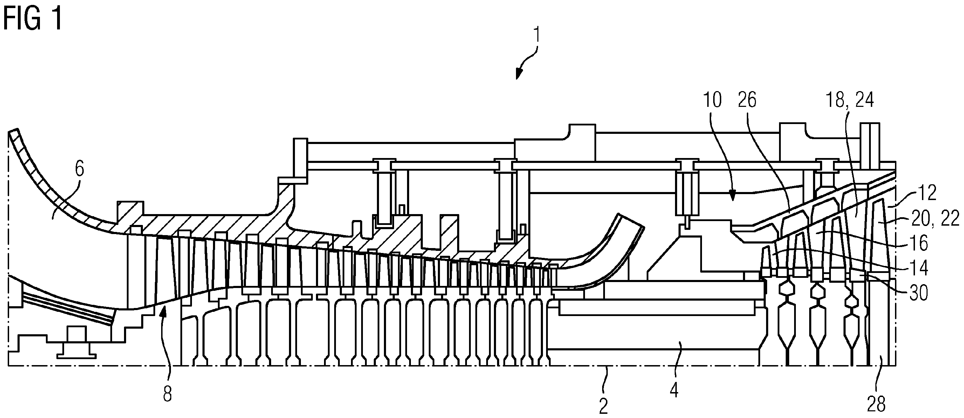

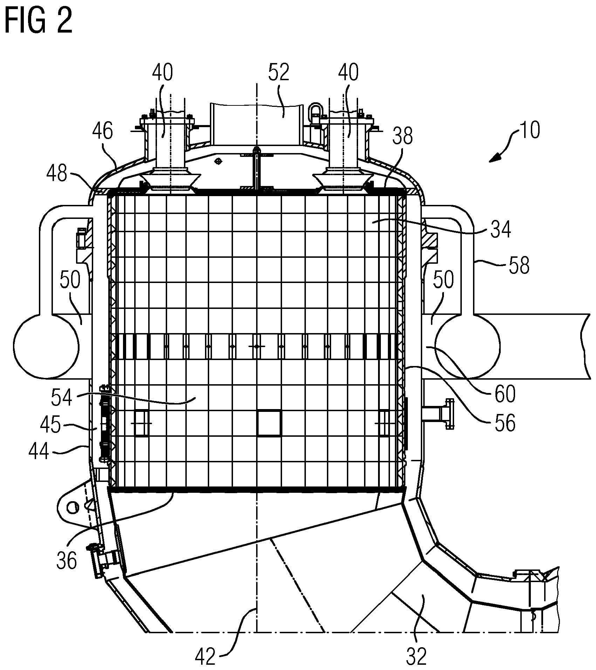

Die FIG 1 zeigt eine Gasturbine 1 in einem Längsteilschnitt. Der Teilschnitt zeigt nur die obere Hälfte der Gasturbine 1. Die Gasturbine 1 weist im Inneren einen um eine Rotationsachse 2 (Axialrichtung) drehgelagerten Rotor 4 auf, der auch als Turbinenläufer bezeichnet wird. Entlang des Rotors 4 folgen aufeinander zunächst ein Ansauggehäuse 6 und ein Verdichter 8. Aus dem Austritt des Verdichters 8 wird die Luft in zwei in FIG 1 nur im Ansatz dargestellte Silobrennkammern 10 geführt, die in FIG 2 näher dargestellt sind. Auf die Silobrennkammer 10 folgen eine Turbine 12 und das nicht mehr dargestellte Abgasgehäuse.

Die Silobrennkammern 10 kommunizieren mit einem ringförmigen Heißgaskanal 14 in der Turbine 12. Dort bilden beispielsweise vier hintereinander geschaltete Turbinenstufen 16 die Turbine 12. Jede Turbinenstufe 16 ist aus zwei Schaufelringen gebildet. In Strömungsrichtung eines Arbeitsmediums gesehen folgt im Heißgaskanal 14 einer aus Leitschaufelreihe 18 eine aus Laufschaufeln 20 gebildete Laufschaufelreihe 22. Die Schaufeln Leitschaufeln 24 der Leitschaufelreihe 18 und die Laufschaufeln 20 sind leicht gekrümmt profiliert, ähnlich einer Flugzeugtragfläche.

Die Leitschaufeln 24 sind dabei am Stator 26 befestigt. Jede Leitschaufel 24 weist neben dem eigentlichen Schaufelblatt einen auch als Plattform bezeichneten Leitschaufelfuß und einen dem Leitschaufelfuß gegenüberliegenden Leitschaufelkopf auf. Der Leitschaufelkopf ist dem Rotor 4 zugewandt und an einem Innenring 30 festgelegt. Jeder Innenring 30 umschließt dabei die Welle des Rotors 4. Ebenso weist jede Laufschaufel 20 einen derartigen Laufschaufelfuß auf, endet jedoch in einer Laufschaufelspitze.

Die Laufschaufeln 18 einer Laufschaufelreihe 22 sind mittels jeweils einer Turbinenscheibe 28 am Rotor 4 angebracht. Die Laufschaufeln 20 bilden somit Bestandteile des Rotors oder Läufers 4. An den Rotor 4 angekoppelt ist ein Generator oder eine Arbeitsmaschine (nicht dargestellt).

Während des Betriebes der Gasturbine 1 wird vom Verdichter 8 durch das Ansauggehäuse 6 Luft angesaugt und verdichtet. Die am turbinenseitigen Ende des Verdichters 8 bereitgestellte verdichtete Luft wird in die Silobrennkammern 10 geführt, was in FIG 2 noch näher erläutert wird, und dort mit einem Brennmittel vermischt. Das Gemisch wird dann unter Bildung eines Heißgases in den Silobrennkammern 10 verbrannt. Von dort aus strömt das Heißgas entlang des Heißgaskanals 14 vorbei an den Leitschaufeln 24 und den Laufschaufeln 20.

Dem Fluidstrom wird durch die möglichst wirbelfreie laminare Umströmung der Turbinenschaufeln 20, 24 ein Teil seiner inneren Energie entzogen, der auf die Laufschaufeln 20 der Turbine 12 übergeht. Über diese wird dann der Rotor 4 in Drehung versetzt, wodurch zunächst der Verdichter 8 angetrieben wird. Die nutzbare Leistung wird an die nicht dargestellte Arbeitsmaschine abgegeben.

FIG 2 zeigt eine der beiden Silobrennkammern 10 der Gasturbine 1 im Querschnitt. Die Gasturbine 1 im Ausführungsbeispiel umfasst zwei solcher Silobrennkammern 10, die beiderseitig der Gasturbine 1 stehend über eine Umlenkung 32 angeordnet sind. Die Anordnung der anderen, nicht dargestellten Silobrennkammer 10 ist entsprechend spiegelsymmetrisch. Alternativ können die Silobrennkammern 10 z. B. auch in einer Boxeranordnung angeordnet sein.

Die Silobrennkammer 10 weist eine kreiszylindrische Grundform auf. Sie besteht aus einem geraden, kreiszylindermantelförmigen Flammrohr 34, welches an seiner unteren Grundfläche 36 nach unten geöffnet ist und dort in die Umlenkung 32 übergeht, die mit der Turbine 12 kommuniziert. Auf der oberen Grundfläche 38, die auch als Brennkammerboden bezeichnet wird, sind mehrere Brenner 40 angeordnet, wobei deren Flammrichtung parallel zur Achse 42 des Flammrohrs 34 nach unten weist.

Das Flammrohr 34 ist konzentrisch von einer somit ebenfalls kreiszylindermantelförmigen Ummantelung 44 umgeben. Die Ummantelung 44 erstreckt sich auch um die Umlenkung 32, wobei sie jedoch stets einen Abstand zur Umlenkung 32 und zum Flammrohr 34 einhält, so dass sich ein - unter Einbeziehung der Umlenkung 32 - schief zylindermantelförmiger Spalt 45 ergibt. Die Ummantelung 44 geht im Bereich des Brennkammerbodens in eine schildförmige Abdeckung 46 über, die um die Brenner 40 herum den Innenraum des Flammrohrs 34 abschließt. Der beschriebene Spalt 45 kommuniziert mit dem Austritt des Verdichters 8 der Gasturbine 1. In dem Spalt 45 strömt daher im Betrieb der Gasturbine 1 verdichtete Luft, die entlang des gesamten Umfangs der Umlenkung 32 und des Flammrohrs 34 bis in den die Brenner 40 umgebenden Raum strömt und dort mit dem Brennstoff verbrannt wird. Die in den Brennerflammen im Flammrohr 34 erzeugten Heißgase gelangen durch den Innenraum der Umlenkung 32 dann in die Turbine 12.

Die verdichtete Luft gelangt jedoch nicht direkt in den die Brenner 40 umgebenden Raum, sondern erst durch einen nicht näher dargestellten Wärmetauscher. Die Gasturbine 1 im Ausführungsbeispiel ist nämlich für eine Wärmerekuperation ausgerüstet. Hierzu ist zunächst der Spalt 45 in der Ebene des Brennkammerbodens, d. h. in der oberen Grundfläche 38 gegen den Raum um die Brenner 40 herum mittels einer ringförmigen Abdichtung 48 gasdicht abgetrennt. In der vertikalen, d. h. axialen Mitte des Flammrohres 34 ist in die Außenseite der Ummantelung 44 jeweils an zwei gegenüberliegenden Seiten Entnahmeleitungen 50 eingebracht, in die die Verdichterluft strömt.

Die Verdichterluft aus den Entnahmeleitungen 50 wird sodann zu dem nicht näher dargestellten Wärmetauscher geführt, wo sie mittels der Abgasluft der Gasturbine 1 erwärmt wird. Anschließend wird sie über eine in der Achse der Silobrennkammer liegende, mit dem Rückraum der Brenner 40 kommunizierende Zuführleitung 52 zu den Brennern 40 geleitet. Durch die Rekuperation im Wärmetauscher kann in Kombination mit Wet Compression, d. h. dem Eindüsen von Wasser in den Ansaugluftstrom des Verdichters 8 eine Wirkungsgradsteigerung von bis zu 8,5 % erreicht werden. Die beschriebene Lösung kann auch bei bestehenden Anlagen nachgerüstet werden.

Der Anbringort der Entnahmeleitungen 50 ergibt sich zum einen aus dem Wunsch, noch möglichst kühle Verdichterluft zum Wärmetauscher zu führen, um hier einen möglichst hohen Wirkungsgrad zu erzielen, zum anderen auch aus baulichen Gegebenheiten, da hier Rohre der Größe DN500 oder DN 700 verwendet werden, um den Druckverlust im Wärmetauschersystem möglichst gering zu halten.

Das dem heißen Gas ausgesetzte Flammrohr 42 unterliegt während des Betriebes der Gasturbine 1 hohen thermischen Belastungen, da höhere Temperaturen einen besseren Wirkungsgrad bedeuten. Das Flammrohr ist daher mit auskleidenden Hitzeschildsteinen 54 versehen, die in übereinander liegenden, ringförmigen Steinreihen angeordnet sind. Diese müssen jedoch gekühlt werden, was einerseits durch konvektive Kühlung durch die im Spalt 45 strömende Verdichterluft geschieht, andererseits durch direkte Prallkühlung mittels Kühlbohrungen 56, die in großer Anzahl in das gesamte Flammrohr 34 eingebracht sind. Durch die Kühlbohrungen strömt Verdichterluft auf die Hitzeschildsteine 54 und kühlt diese.

Problematisch ist hierbei jedoch, dass die Entnahmeleitungen 50 Drucksenken darstellen, so dass die verdichtete Luft vom Verdichteraustritt mit dem größten Massenstrom durch diese Rohrleitungen strömt. Dadurch verringert sich die Kühlluftmenge der oberhalb der Entnahmeleitungen 50 liegenden Hitzeschildsteine 54, so dass die Kühlung hier ungenügend sein kann.

Daher sind Anzapfleitungen 58 vorgesehen, die auf der Höhe der obersten Steinreihe, d. h. praktisch direkt angrenzend an die Abdichtung 48 im oberen axialen Endbereich des Spaltes 45 in die Ummantelung 44 eingebracht sind und mit dem Spalt 45 kommunizieren. Für jede Entnahmeleitung 50 ist eine oberhalb der Entnahmeleitung 50 liegende Anzapfleitung 58 vorgesehen, die in die jeweilige Entnahmeleitung 50 mündet. Die Anzapfleitungen 58 haben dabei einen wesentlich geringeren Durchmesser als die Entnahmeleitungen 50.

Durch diese Anzapfleitungen 58 strömt ein Teil der Luft an der Einmündung zur jeweiligen Entnahmeleitung 50 vorbei und in die Anzapfleitungen 58, so dass für die oberen Steinreihen eine Zwangsströmung erzeugt wird, mittels derer diese gekühlt werden. Das gesamte System ist dabei so ausgelegt, dass eine ausreichende Kühlströmung entsteht.

Diese Auslegung umfasst einerseits den Innendurchmesser der Anzapfleitungen 58 im Verhältnis zu dem der Entnahmeleitungen 50. Andererseits sind Maßnahmen getroffen, die einen entsprechend geringeren Druckverlust in den Anzapfleitungen 58 als im Abschnitt 60 zwischen Eintritt der Entnahmeleitung 50 und der Mündung der Anzapfleitungen 58 in die Entnahmeleitung 50 erreichen. Dazu kann der Eintritt der Entnahmeleitung 50 scharfkantig ausgeführt sein, der der Anzapfleitung 58 jedoch abgerundet. Zusätzlich können in dem Abschnitt 60 zwischen Eintritt der Entnahmeleitung 50 und der Mündung der Anzapfleitungen 58 in die Entnahmeleitung 50 Blenden vorgesehen sein.

## Patentansprüche

1. Silobrennkammer (10) für eine Gasturbine (1), umfassend ein zylindrisches Flammrohr (34), welches auf seiner Außenseite unter Bildung eines Spaltes (45) mit einer zylindrischen Ummantelung (44) versehen ist, wobei eine erste Grundfläche (38) des Flammrohrs (34) einen Brenner (40) aufweist und die zweite Grundfläche (36) des Flammrohrs (34) eine mit dem Turbineneintritt der Gasturbine (1) verbindbare Öffnung aufweist, **dadurch gekennzeichnet, dass** die Ummantelung (44) in einem axialen Mittelbereich eine Entnahmeleitung (50) zur Entnahme von Luft aus dem Spalt (45) aufweist, und wobei die Ummantelung (44) in einem der ersten Grundfläche (38) zugeordneten axialen Endbereich eine Anzapfleitung (58) aufweist, die in die Entnahmeleitung (50) mündet.

2. Silobrennkammer (10) nach Anspruch 1, bei der eine Mehrzahl gleichartiger Entnahmeleitungen (50) in regelmäßigem Abstand entlang des Umfangs der Ummantelung (44) angeordnet ist, wobei die Ummantelung (44) für jede der Entnahmeleitungen (50) in einem der ersten Grundfläche (38) zugeordneten axialen Endbereich eine Anzapfleitung (58) aufweist, die in die jeweilige Entnahmeleitung (50) mündet.

3. Silobrennkammer (10) nach einem der vorhergehenden Ansprüche, bei der die jeweilige Anzapfleitung (58) einen geringeren Innendurchmesser aufweist als die jeweilige Entnahmeleitung (50).

4. Silobrennkammer (10) nach einem der vorhergehenden Ansprüche, bei der die jeweilige Anzapfleitung (58) und der Abschnitt (60) der jeweiligen Entnahmeleitung (50) zwischen Ummantelung (44) und Mündung der Anzapfleitung (58) derart ausgebildet sind, dass die Anzapfleitung (58) einen geringeren Druckverlust erzeugt als der Abschnitt (60) der jeweiligen Entnahmeleitung (50).

5. Silobrennkammer (10) nach Anspruch 4, bei der der Übergang zwischen Ummantelung (44) und jeweiliger Anzapfleitung (58) abgerundet ist.

6. Silobrennkammer (10) nach Anspruch 4 oder 5, bei der der Übergang zwischen Ummantelung (44) und jeweiliger Entnahmeleitung (50) scharfkantig ist.

7. Silobrennkammer (10) nach einem der Ansprüche 4 bis 6, bei der der Abschnitt (60) der jeweiligen Entnahmeleitung (50) eine Blende aufweist.

8. Gasturbine (1) mit einer Silobrennkammer (10) nach einem der vorhergehenden Ansprüche.

9. Gasturbine (1) nach Anspruch 8, bei der die Entnahmeleitung (50) zu einem Wärmetauscher führt, in dem die entnommene Luft mittels der Abgaswärme der Gasturbine (1) vorgewärmt wird.

10. Gasturbine (1) nach Anspruch 8 und 9, in deren Silobrennkammer (10) der Spalt (45) zur ersten Grundfläche (38) hin abgedichtet ist.

## Claims

1. Silo combustion chamber (10) for a gas turbine (1), comprising a cylindrical flame tube (34) which is provided, on its outer side and forming a gap (45), with a cylindrical jacket (44), wherein a first base (38) of the flame tube (34) has a burner (40) and the second base (36) of the flame tube (34) has an opening that can be connected to the turbine inlet of the gas turbine (1),
**characterized in that** the jacket (44) has, in an axial central region, an extraction line (50) for extracting air from the gap (45), and **in that** the jacket (44) has, in an axial end region assigned to the first base (38), a bleed line (58) that opens into the extraction line (50).

2. Silo combustion chamber (10) according to Claim 1, in which a plurality of extraction lines (50) of the same type are arranged at regular intervals around the circumference of the jacket (44), wherein the jacket (44) has, for each one of the extraction lines (50), in an axial end region assigned to the first base (38), a bleed line (58) that opens into the extraction line (50).

3. Silo combustion chamber (10) according to either of the preceding claims, in which the respective bleed line (58) has a smaller internal diameter than the respective extraction line (50).

4. Silo combustion chamber (10) according to one of the preceding claims, in which the respective bleed line (58) and the section (60) of the respective extraction line (50) between the jacket (44) and the mouth of the bleed line (58) are designed such that the bleed line (58) generates a smaller pressure drop than the section (60) of the respective extraction line (50).

5. Silo combustion chamber (10) according to Claim 4, in which the transition between the jacket (44) and the respective bleed line (58) is rounded.

6. Silo combustion chamber (10) according to Claim 4 or 5, in which the transition between the jacket (44) and the respective extraction line (50) is sharp-edged.

7. Silo combustion chamber (10) according to one of Claims 4 to 6, in which the section (60) of the respective extraction line (50) has a diaphragm.

8. Gas turbine (1) having a silo combustion chamber (10) according to one of the preceding claims.

9. Gas turbine (1) according to Claim 8, in which the extraction line (50) leads to a heat exchanger in which the extracted air is preheated by means of the exhaust gas heat of the gas turbine (1).

10. Gas turbine (1) according to Claims 8 and 9, in whose silo combustion chamber (10) the gap (45) is sealed with respect to the first base (38).

## Revendications

1. Chambre de combustion (10) de type silo pour une turbine (1) à gaz, comprenant un tube (34) de flammes cylindrique, qui est pourvu sur sa face extérieure, avec formation d'un intervalle (45), d'une enveloppe (44) cylindrique, une première surface (38) de base du tube (34) de flammes ayant un brûleur (40) et la deuxième surface (36) de base du tube (34) de flammes ayant une ouverture pouvant communiquer avec l'entrée de la turbine (1) à gaz, **caractérisée en ce que**
l'enveloppe (44) a, dans une partie médiane axiale, un conduit (50) de prélèvement d'air de l'intervalle (45) et l'enveloppe (44) a, dans une partie de l'extrémité axiale associée à la première surface (38) de base, un conduit (58) de soutirage, qui débouche dans le conduit (50) de prélèvement.

2. Chambre (10) de combustion de type silo suivant la revendication 1, dans laquelle une pluralité de conduits (50) de prélèvement de même type sont disposés à distance régulière le long du pourtour de l'enveloppe (44), l'enveloppe (44) ayant pour chacun des conduits (50) de prélèvement, dans une partie de l'extrémité axiale associée à la première surface (38) de base, un conduit (58) de soutirage, qui débouche dans le conduit (50) de prélèvement respectif.

3. Chambre (10) de combustion de type silo suivant l'une des revendications précédentes, dans laquelle le conduit (58) de soutirage a un diamètre intérieur plus petit que son conduit (50) de prélèvement.

4. Chambre (10) de combustion de type silo suivant l'une des revendications précédentes, dans laquelle le conduit (58) de soutirage et le tronçon du conduit (50) de prélèvement entre l'enveloppe (44) et l'embouchure du conduit (58) de soutirage sont constitués de manière à ce que le conduit (58) de soutirage produise une perte de charge plus petite que le tronçon (60) de son conduit (50) de prélèvement.

5. Chambre (10) de combustion de type silo suivant la revendication 4, dans laquelle la transition entre l'enveloppe (44) et le conduit (58) de soutirage est arrondie.

6. Chambre (10) de combustion de type silo suivant la revendication 4 ou 5, dans laquelle la transition entre l'enveloppe (44) et le conduit (50) de prélèvement est à bord vif.

7. Chambre (10) de combustion du type silo suivant l'une des revendications 4 à 6, dans laquelle le tronçon (60) du conduit (50) de prélèvement a un diaphragme.

8. Turbine (1) à gaz ayant une chambre (10) de combustion de type silo suivant l'une des revendications précédentes.

9. Turbine (1) à gaz suivant la revendication 8, dans laquelle le conduit (50) de prélèvement va à un échangeur de chaleur, dans lequel l'air prélevé est préchauffé au moyen de la chaleur perdue de la turbine (1) à gaz.

10. Turbine (1) à gaz suivant la revendication 8 et 9, dans la chambre de combustion (10) du type silo de laquelle l'intervalle (45) vers la première surface (38) de base est rendu étanche.
